# EUROPEAN PATENT APPLICATION

(11) **EP 1 900 276 A1**
(43) Date of publication of application: **19.03.2008**
(21) Application number: 07253484.5
(22) Date of filing: 03.09.2007
(51) Int. Cl.: A01K 1/02

(54) **Livestock carriers**

(30) Priority: 05.09.2006 GB 0617450
(71) Applicant: Cronos Containers Limited, Marlow, Buckinghamshire SL7 3AB (GB)
(72) Inventor: Elliot, Graham Keith Murray, Camberley, Surrey GU16 6QT (GB)
(74) Representative: Bardo, Julian Eason

(57) **Abstract**

A livestock carrier comprises a base 1 of generally rectangular shape having two ends and two sides, a pair of end walls 3, 4 and a pair of side walls 2. The carrier has a first, carrying, configuration, for carrying livestock in which the side wall2 and the end walls 3, 4 extend upwardly from respective edge regions of the base 1 to define one or more pens, and a second, stowed, configuration in which the side walls 2 and end walls 3, 4 overlie the base 1 and the overall height of the carrier is substantially reduced.

## Description

This invention relates to livestock carriers.

There is commonly a need to transport livestock by road, sea or rail. Specially designed transport facilities are required to take account of the needs of the animals and that increases the costs of transport. One particular problem is that it is often not possible to arrange for any livestock carrier to be used to carry livestock both on an outward and return journey, since at any one time it is unlikely that livestock will be required to be moved in opposite directions. Consequently, the livestock carrier may well travel empty on one of its outward or return journeys, adding to the transport costs.

It is an object of the invention to provide an improved livestock carrier.

According to the invention there is provided a livestock carrier comprising a base of generally rectangular shape having two ends and two sides, a pair of end walls and a pair of side walls, the carrier having a first, carrying, configuration for carrying livestock in which the side walls and the end walls extend upwardly from respective edge regions of the base to define one or more pens, and a second, stowed, configuration in which the side walls and end walls overlie the base and the overall height of the carrier is substantially reduced.

By providing a livestock carrier, which is transformable from a first, carrying configuration to a second stowed configuration of reduced overall height, it becomes easier to transport carriers when they are empty.

The carrier preferably has an overall height in its second, stowed, configuration of less than about half its height in its first, carrying configuration. In an embodiment of the invention described below, the height of the carrier in its second, stowed, configuration is about one quarter of its height in its first, carrying, configuration.

Preferably, at least one, and more preferably each, of the side walls, comprises a network of bars. Whilst it is within the scope of the invention for the bars to carry panels which close over the side wall of the carrier, it is preferred that the wall is at least partly an open framework allowing light to enter and enhancing ventilation of the carrier.

The carrier is preferably arranged such that it can be handled by load handling equipment designed to handle ISO freight containers. Preferably, when in the first, carrying, configuration, the carrier is provided with ISO container fittings at each of its four corners, as viewed in plan. More preferably, when in the first, carrying, configuration, respective corner fittings are provided at the top and bottom regions of each corner, as viewed in plan. The corner fittings at the top of the carrier may, for example, be engaged by a spreader arm of ISO load handling equipment, whilst the corner fittings at the bottom of the carrier may, for example, be used to lock the carrier to a trailer or to lift the carrier using slings.

The carrier is preferably arranged such that, when in the second, stowed, configuration, it is able to be handled by ISO load handling equipment and is therefore preferably provided with ISO corner fittings at each of its four corners as viewed in plan. More preferably, when in the second, stowed, configuration, respective corner fittings are provided at the top and bottom regions of each corner as viewed in plan. The carrier can then, for example, be lifted by a spreader arm of ISO load handling equipment engaging the top corner fittings and locked to a trailer, for example, using the bottom corner fittings.

Preferably, the carrier is able to be locked in its second, stowed, configuration. That may be accomplished by locking the free ends of the end walls to the base of the carrier.

Where reference is made in the specification to "ISO corner fittings", it should be understood that the corner fittings do not necessarily comply with all the requirements of ISO standards, but that they are suitable for engaging ISO load handling equipment and/or ISO fittings on trailers.

A standard width for a freight container to be handled by ISO load handling equipment is 2438 mm. Accordingly, it is preferred that the overall width of the carrier is in the range of 2300 mm to 2600 mm. In an embodiment of the invention described below, the overall width of the carrier is 2438 mm.

Similarly, the overall length of an ISO freight container is usually 10 foot (3029 mm), 20 foot (6058 mm), 40 foot (12192 mm) or 45 foot (13716 mm). Preferably the carriers are either about 20 foot (6058 mm), or about 40 foot (12192 mm) long and more preferably, to be of a manageable size, about 20 foot long (6058 mm). Accordingly, the overall length of the carrier is preferably in the region of 5900 mm to 6300 mm.

Preferably, the carrier can be changed from the first, carrying, configuration into the second, stowed, configuration by folding of the side walls and the end walls over the base. Preferably, the side walls are each foldable about an axis in the region of a respective side edge of the base; in an embodiment of the invention described below, the side walls are foldable about axes adjacent to the top of the base. The end walls are preferably each foldable about an axis in the region of a respective end edge of the base. Again, in an embodiment of the invention described below, the axes are in the region of the top of the base. Preferably, the end walls are able to be folded after the side walls have been folded. Thus to convert the carrier from the first, carrying, configuration to the second, stowed, configuration, the side walls are first folded and then the end walls are folded. Folding of the side or end walls may be facilitated by counterbalancing the walls with springs.

The carrier preferably further includes an opening divider gate arrangement extending across the interior of the carrier away from the ends of the carrier. It is advantageous, especially if the carrier has a length of the order of 6000 mm to divide the carrier into more than one pen. The divider gate arrangement may comprise a single member pivotally mounted on one side wall, or it may comprise two members each pivotally mounted on a respective side wall. Preferably, the divider gate arrangement is able to be pivoted to a position adjacent one or both of the side walls without preventing the side walls being folded over the base.

The carrier preferably includes a first openable rear gate arrangement extending across the interior of the carrier in the region of the rear end wall of the carrier. The first openable rear gate arrangement may form part of the rear end wall of the carrier. For added security, the carrier preferably further includes a second openable rear gate arrangement extending across the interior of the carrier inside the first openable rear gate arrangement of the carrier. Each of the first and second openable rear gate arrangements may comprise a single unit pivotally mounted at one side of the carrier or a pair of units pivotally mounted at respective sides of the carrier. In one embodiment of the invention described below, the second openable gate arrangement is mounted for pivoting movement as a single unit about a vertical axis at one side of the carrier and the first openable gate arrangement is mounted for pivoting movement as two units about respective vertical axes at respective sides of the carrier.

Preferably, the carrier further includes a door in a side wall for allowing the passage of a person. That facilitates access to the carrier.

The carrier preferably further includes one or more tanks in the base of the carrier below a floor of the carrier. Such tanks are able to accommodate liquid excreted by the livestock. Preferably, at least portions of the floor are movable to allow access to the tanks. More preferably, at least portions of the floor are pivotally mounted for pivoting between an approximately horizontal orientation and an approximately upright orientation.

The invention further provides a method of transporting livestock using a livestock carrier as defined above. Preferably the invention includes a step of transporting livestock from a first location to a second location with the livestock carrier in the first, carrying, configuration and another step of transporting the carrier without livestock from the second location to a third location with the livestock carrier in the second, stowed, configuration. The first and third locations may be the same or different locations and the steps may be carried out in the order recited above or in the opposite order.

Preferably, a plurality of livestock carriers are used and at least two carriers are stacked one on top of another during the step of transporting the carriers without livestock from the second location to the third location with the livestock carriers in the second, stowed, configuration.

Other features of the method of the invention will be apparent from certain features of the livestock carrier described below.

By way of example an embodiment of the invention will now be described with reference to the accompanying schematic drawings, of which:

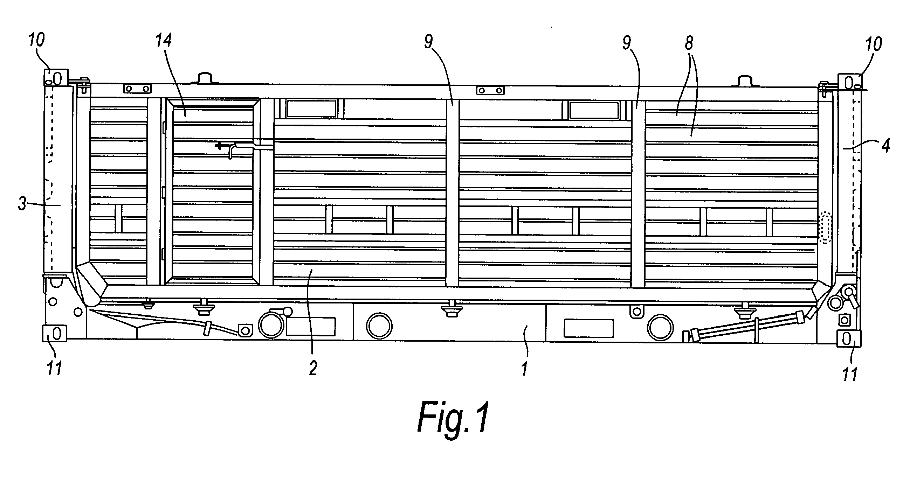

Fig. 1 is a side view of a livestock carrier,
Fig. 2 is a plan view of the livestock carrier,

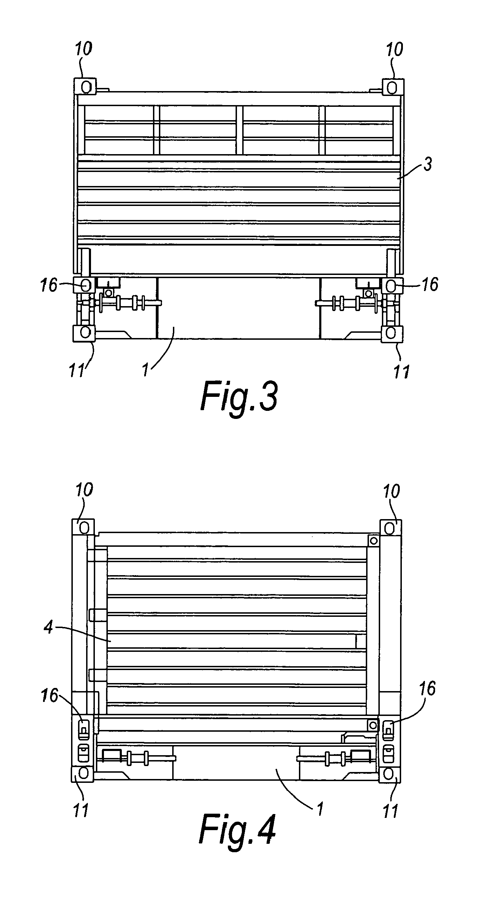

Fig. 3 is a front end view of the livestock carrier,
Fig. 4 is a rear end view of the livestock carrier,
Fig. 5 is a sectional view along the lines V-V marked in Fig. 2, and
Fig. 6 is a sectional view along the lines VI-VI marked in Fig. 2.

The livestock carrier is shown in the drawings in its first, carrying, configuration and its arrangement in this configuration will first be described.

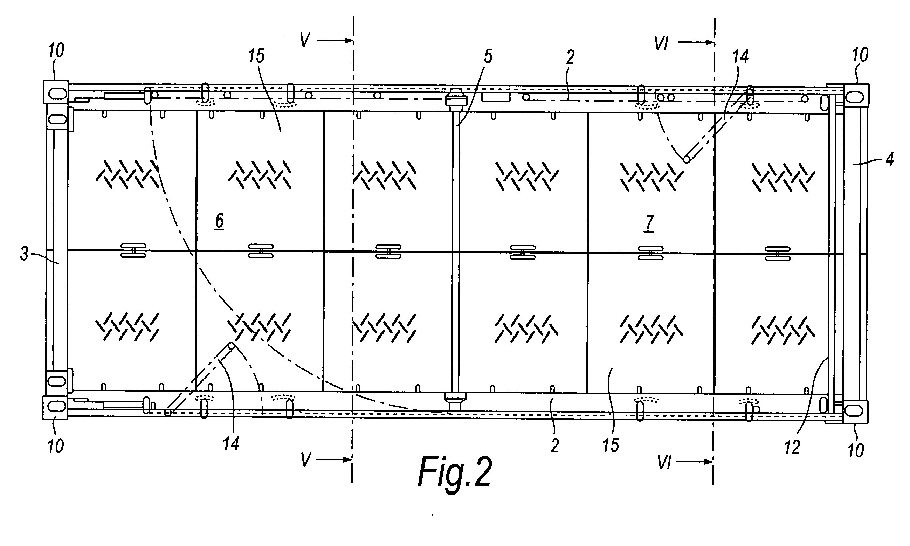

The carrier generally comprises a rectangular base 1, side walls 2, a front end wall 3 and a rear end wall 4. The walls 2, 3, 4 extend upwardly from respective edge regions of the base to define an interior space within which livestock can be carried. A central gate 5 is pivotally mounted about a vertical axis on one of the side walls 2 and extending across the width of the carrier to the opposite side wall 2, to which it can be releasably fastened. The central gate 5 thus divides the interior space into a front pen 6 and a rear pen 7. When released the gate 5 can be pivoted towards the front of the carrier to a position alongside one of the side walls as shown by a dotted line in Fig. 2.

Each of the walls of the carrier comprises a series of horizontal bars 8 which in some places are filled in with panels and in other places have gaps therebetween to allow the passage of air and light. The side walls each comprise a network of bars including horizontal bars 8 and uprights 9.

At the opposite sides of the top of each of the end walls 3, 4, ISO corner fittings 10 are provided and at the four corners of the bottom of the base 1 ISO corner fittings 11 are provided. The corner fittings 10 and 11 are positioned at the same spacing as on a standard ISO freight container and thus enable the carrier to be handled by ISO handling equipment and to be fixed to trailers, for example, conventional road trailers or roll trailers of the kind used in ports and on vessels, in the same way as a standard ISO freight container would be handled and transported. In the particular example shown, the carrier corresponds to a 20 ft (6058 mm)freight container and therefore has an overall length of 6058 mm and an overall width of 2438 mm.

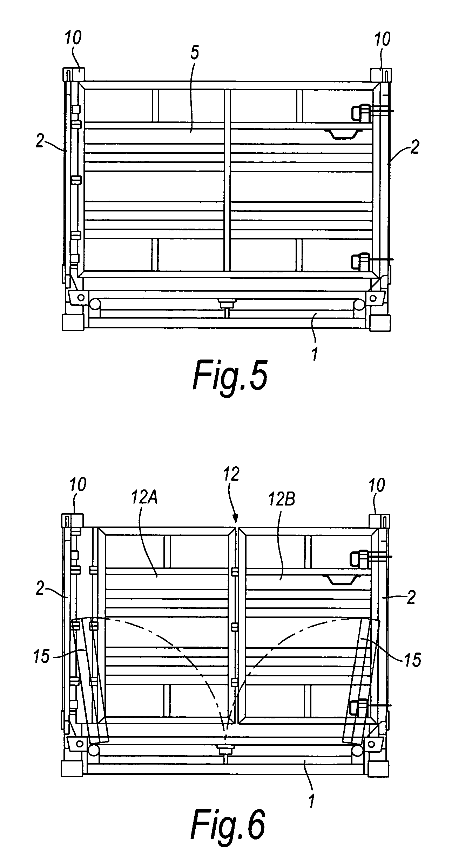

Inside the rear end wall 4 is an inner rear door 12 which, like central gate 5, is pivotal about a vertical axis at the end of one side wall 2 and releasably fastenable to the other side wall 2. As can be seen in Fig. 6, the inner door 12 is formed in two pieces 12A and 12B that are pivotally connected together about a central vertical axis. The rear end wall 4 incorporates a rear gate 13 which is a single unit pivoted about one upright at one edge of the end wall 4 and releasably fastenable to the upright at the other edge of the end wall 4. The rear gate 13 is pivotally connected to the opposite side of the carrier to the inner door 12.

Each side wall 2 is provided with a respective stockman's door 14 to allow access to each of the pens in the carrier. The doors 14 are mounted for pivotal movement about a vertical axis.

In Fig. 2 open positions of the doors 12, 14 and the gate 13 are marked by dotted lines.

The carrier is provided with a plurality of floor panels 15. In the illustrated embodiment there are twelve panels 15. Each panel extends halfway across the carrier from one side edge of the base 1 and is pivotally mounted at that side edge, allowing the floor panels to be raised, as shown in Fig. 6, to allow access to tanks (not shown) below the floor panels, which are themselves perforated to allow liquid excreted from the livestock to drain into the tanks.

In order to convert the carrier from its first, carrying, configuration shown in solid outline in the drawings to its second, stowed, configuration the following steps are taken:
the central gate 5 is pivoted 90° from its position shown in Fig. 2 towards the front of the carrier to lie along the inside of one side wall 2;
the inner door 12 is pivoted 90° from its position shown in Fig. 2 towards the front of the carrier to also lie along the inside of one side wall 2;
the stockman's doors 14, the rear gate 13 and the floor panels 15 are kept in, or moved to, their closed positions;
the side walls 2 are folded downwardly; pivoting 90° about axes adjacent to their bottom edges so that they overlie one another and the floor panels 15; the inner door 12 and the central gate 5 fold with the side wall to which they are pivotally secured;
the end walls 3, 4 are then folded downwardly, pivoting 90° about axes in the region of their bottom edges, the end walls 3, 4 overlying portions of the side walls 2; and
the free ends of the end walls 3, 4 are locked to the base 1 at each side by locks (not shown) which engage the corner fittings 10 on the end walls 3, 4.

In the example of the invention shown, the height of the carrier when in the first, carrying, configuration shown in the drawings is 1930 mm and that is reduced to 482 mm in the second, stowed, configuration.

In the second stowed configuration, openings 16 in the bottom regions of the end walls provide top lift apertures which are located at the same spacings as the apertures in the tops of the corner fittings 10 when the end walls are erect and that allows the carrier, when in the stowed configuration, still to be lifted via a spreader arm of ISO load handling equipment and also allows one carrier to be stacked on top of another with the carriers twistlocked together. Indeed, several carriers can be stacked on top of one another in this way and it may be noted that in the example illustrated a stack of four stowed carriers is about the same height as a single carrier in the first, carrying configuration.

In order to assist the folding and unfolding of the end walls spring counterbalances are provided. If desired, the side walls can also be counterbalanced.

In use, an empty carrier may be filled with livestock, for example cattle or sheep, by adopting the following procedure, starting with the carrier in its first, carrying, configuration shown in solid outline in the drawings:
the inner door 12 and the rear gate 13 are pivoted outwardly to the positions shown in dotted outline in Fig. 2 and the central gate 5 is pivoted 90° from its position shown in Fig. 2 towards the rear of the carrier to lie along the inside of one side wall 2;
livestock are loaded through the rear end of the carrier and taken to the front of the carrier until the required number of livestock are in the front pen 6;
the central gate 5 is pivoted to its closed position (shown in the drawings) and fastened;
the remaining livestock are loaded through the rear end of the carrier into the rear pen 7;
the inner door 12 is pivoted to its closed position (shown in the drawings) and fastened;
the rear gate 13 is pivoted to its closed position (shown in the drawings) and fastened;
the livestock carrier is lifted, for example, by ISO handling equipment engaging the top corner fittings 10 onto a road trailer suitable for carrying ISO freight containers and fastened to the trailer using the bottom corner fittings 11 on the base 1;
the carrier is then driven to its destination, being transferred if necessary onto a ship, for example, that transfer being accomplished in the same manner as for a freight container (for example, the carrier may be transported on a roll trailer);
at the destination for the livestock, the carrier is lifted off a trailer onto the ground;
the inner door 12 and the rear gate 13 is opened to allow livestock to leave the rear pen 7;
the central gate 5 is opened to allow livestock to leave the front pen 6;
the floor panels 15 can be washed down and the tanks below the floor panels emptied;
the carrier is converted into its second, stowed, configuration;
the carrier is formed into a stack with, say, five other carriers to form a six high stack with adjacent carriers twistlocked to one another;
the stack of carriers are transported back to the starting location with an entire stack being accommodated in the space that one carrier in its first, carrying, configuration occupied;
the carriers are separated to allow them each to be returned to the first, carrying configuration and used again.

A stack of six stowed carriers having the dimensions in this particular example have an overall height of 2896 mm (9 feet 6 inches), which is a standard height of a freight container. Thus 12 carriers in the form of two stacks placed end to end can fit in the space of a 40 ft (12192 mm) freight container, whether on a trailer or in a vessel. When the carriers are in their first configuration and carrying livestock, they can again be stacked on top of one another and secured together by twistlocks. In this case, however, the stack will normally be lower, comprising typically just two carriers.

## Claims

1. A livestock carrier comprising a base of generally rectangular shape having two ends and two sides, a pair of end walls and a pair of side walls, the carrier having a first, carrying, configuration for carrying livestock in which the side walls and the end walls extend upwardly from respective edge regions of the base to define one or more pens, and a second, stowed, configuration in which the side walls and end walls overlie the base and the overall height of the carrier is substantially reduced.

2. A livestock carrier according to claim 1, in which each of the side walls comprises a network of bars.

3. A livestock carrier according to claim 1 or 2, in which, when in the first, carrying, configuration, the carrier is provided with ISO corner fittings at each of its four corners, as viewed in plan.

4. A livestock carrier according to claim 3, in which, when in the first, carrying, configuration, respective corner fittings are provided at the top and bottom regions of each corner, as viewed in plan.

5. A livestock carrier according to any preceding claim, in which, when in the second, stowed configuration, the carrier is provided with ISO corner fittings at each of its four corners, as viewed in plan.

6. A livestock carrier according to claim 5, in which, when in the second, stowed, configuration, respective corner fittings are provided at the top and bottom regions of each corner, as viewed in plan.

7. A livestock carrier according to any preceding claim, in which the carrier is able to be locked in its second, stowed, configuration.

8. A livestock carrier according to any preceding claim, in which the overall width of the carrier is in the range of 2300 mm to 2600 mm.

9. A livestock carrier according to any preceding claim, in which the overall length of the carrier is in the range of 5900 to 6300 mm.

10. A livestock carrier according to any preceding claim, in which the carrier can be changed from the first, carrying, configuration into the second, stowed, configuration by folding of the side walls and the end walls over the base.

11. A livestock carrier according to claim 10, in which the side walls are each foldable about an axis in the region of a respective side edge of the base.

12. A livestock carrier according to claim 10 or 11, in which the end walls are each foldable about an axis in the region of a respective end edge of the base.

13. A livestock carrier according to claim 11 and 12, in which the end walls are able to be folded after the side walls have been folded.

14. A livestock carrier according to any preceding claim, further including an openable divider gate arrangement extending across the interior of the carrier away from the ends of the carrier.

15. A livestock carrier according to claim 14, in which the divider gate arrangement is pivotally mounted on one or both of the side walls of the carrier.

16. A livestock carrier according to claim 15 when dependent upon any of claims 10 to 13, in which the divider gate arrangement is able to be pivoted to a position adjacent one or both of the side walls without preventing the side walls being folded over the base.

17. A livestock carrier according to any preceding claim, further including a first openable rear gate arrangement extending across the interior of the carrier in the region of the rear end wall of the carrier.

18. A livestock carrier according to claim 17, further including a second openable rear gate arrangement extending across the interior of the carrier inside the first openable rear gate arrangement of the carrier.

19. A livestock carrier according to claim 18, in which the second openable gate arrangement is mounted for pivoting movement as a single unit about a vertical axis at one side of the carrier and the first openable gate arrangement is mounted for pivoting movement as a two units about respective vertical axes at respective sides of the carrier.

20. A livestock carrier according to claim 19, further including a door in a side wall of the carrier for allowing the passage of a person.

21. A livestock carrier according to any preceding claim, further including one or more tanks in the base of the carrier below a floor of the carrier.

22. A livestock carrier according to claim 21, in which at least portions of the floor are movable to allow access to the tanks.

23. A livestock carrier according to claim 22, in which at least portions of the floor are pivotally mounted for pivoting between an approximately horizontal orientation and an approximately upright orientation.

24. A livestock carrier substantially as herein described with reference to the accompanying drawings.

25. A method of transporting livestock using a livestock carrier according to any preceding claim.

26. A method according to claim 25, including a step of transporting livestock from a first location to a second location with the livestock carrier in the first, carrying, configuration and another step of transporting the carrier without livestock from the second location to a third location with the livestock carrier in the second, stowed, configuration.

27. A method according to claim 26, in which the first and third locations are the same location.

28. A method according to claim 26 or 27, in which the steps are carried out in the order recited above.

29. A method according to any of claims 26 to 28, in which a plurality of livestock carriers are used and at least two carriers are stacked one on top of another during the step of transporting the carriers without livestock from the second location to the third location with the livestock carriers in the second, stowed, configuration.
